# EUROPÄISCHE PATENTANMELDUNG

(11) **EP 3 825 263 A1**
(43) Veröffentlichungstag der Anmeldung: **26.05.2021**
(21) Anmeldenummer: 19210263.0
(22) Anmeldetag: 20.11.2019
(51) Int. Cl.: B65G 47/31, G05B 19/418, G05B 19/042, G05B 13/02

(54) **VERFAHREN ZUR COMPUTER-IMPLEMENTIERTEN KONFIGURATION EINER GEREGELTEN ANTRIEBSAPPLIKATION EINES LOGISTIKSYSTEMS**

(71) Anmelder: Siemens Aktiengesellschaft, 80333 München (DE)
(72) Erfinder: Tokic, Michael, 88069 Tettnang (DE); Grossenbacher, David, 160 00 Prag 6-Dejvice (CZ); Hein, Daniel, 81549 München (DE); Leipold, Michael, 9091 Nürberg (DE); Sterzing, Volkmar, 85579 Neubiberg (DE); Udluft, Steffen, 82223 Eichenau (DE)

(57) **Zusammenfassung**

Die Erfindung beschreibt ein Verfahren zur computer-implementierten Konfiguration einer geregelten Antriebsapplikation eines Logistiksystems (1). Das Logistiksystem (1) umfasst mehrere parallele Förderstrecken (10, 20, 30) für Stückgut, die in Förderrichtung (FR) jeweils in eine Vereinigungseinheit (40) münden. Jede der Förderstrecken (10, 20, 30) besteht aus einer Mehrzahl an Teilförderstrecken (11-13, 21-23, 31-33), die unter Steuerung einer Recheneinheit (60) von einem jeweils zugeordneten Antrieb (11A-13A, 21A-23A, 31A-33A) beschleunigt oder verzögert werden, um die Vereinigungseinheit (40) in die Lage zu versetzen, das Stückgut auf eine einzige Ausgangsförderstrecke (50) mit definiertem Abstand zu vereinen. Zunächst wird ein Systemmodell des Logistiksystems (1) anhand Betriebsdaten des Logistiksystems (1) bestimmt, die für eine Vielzahl von Zeitpunkten des Betriebs des Logistiksystems vorliegen und Sensorwerte des Logistiksystems und Stellgrößenänderungen umfassen. Dann wird anhand des Systemmodells eine Regelfunktion des Logistiksystems (1) bestimmt, die zumindest Konfigurationsdaten (KD) für die Antriebe (11A-13A, 21A-23A, 31A-33A) umfasst, indem unter Vorgabe eines oder mehrerer zu erreichender Leistungsmerkmale in dem Systemmodell zumindest eine Regelung ausgeführt wird, bei der die Betriebsdaten (BD) für eine Vielzahl von Zeitschritten simuliert werden. Für jeden Zeitschritt wird ein Belohnungsmaß ermittelt, wobei die Regelung als Regelfunktion verwendet wird, bei der eine vorgegebene Fitnessfunktion, die die Belohnungsmaße einer Vielzahl von Zeitschritten aggregiert, ein vorbestimmtes Kriterium erfüllt.

## Beschreibung

Die vorliegende Erfindung betrifft ein Verfahren und eine Vorrichtung zur computer-implementierten Konfiguration einer geregelten Antriebsapplikation eines Logistiksystems.

Ein sog. "Dynamic Gapper" ist eine geregelte Antriebsapplikation, die in der Intralogistik genutzt wird. Bei dieser Applikation sollen Pakete, die in der Regel von zwei oder mehreren parallelen Förderstrecken in einer Richtung gefördert werden, auf eine einzige Ausgangsförderstrecke zusammengeführt werden. Dabei sollen die Pakete, die in undefinierten Abständen auf den zwei oder mehr parallelen Förderstrecken liegen, mittels einer Vereinigungseinheit auf die Ausgangsförderstrecke sortiert und gleichzeitig in definierte Abstände gebracht werden.

Das Vereinen der Pakete und die Erzeugung definierter Abstände wird mittels mehrerer Teilförderbänder jeweiliger Förderstrecken erzielt. Die jeweiligen Teilförderbänder werden von Getriebemotoren angetrieben und von einem Frequenzumrichter gesteuert. Die Sollwerte für die Geschwindigkeiten jeweiliger Teilförderstrecken werden von einer Steuerung vorgegeben. Dabei werden Positionen der Pakete auf den Teilförderstrecken sensorisch detektiert und in der Steuerung verarbeitet. Die Position zwischen den Paketen wird in der Regel durch PI-Regler beeinflusst, die zwischen jeweils zwei Paketen agieren. Aufgrund der vorliegenden Informationen werden die Teilförderstrecken von der Steuerung unterschiedlich beschleunigt und verzögert.

Aufgrund der Mehrzahl an parallelen Förderstrecken und jeweils mehrerer Teilförderbänder, die unabhängig voneinander zu beschleunigen und verzögern sind, ist die Steuerung regelungstechnisch aufwändig. Die Optimierung aufgrund verschiedener Paketgrößen und -beschaffenheiten ist komplex. Die Anpassung des Regelungsprozesses bei unterschiedlichen mechanischen Aufbauarten ist groß. Wird z.B. die Anzahl der Förderstrecken oder die Länge der einzelnen Teilförderstrecken verändert, so hat dies wesentlichen Einfluss auf den Regelungsprozess und bedingt Anpassungen in der Steuerung.

Ein grundsätzlich übergeordnetes Ziel der Anwendung besteht darin, den Durchsatz einer solchen geregelten Antriebsapplikation dynamisch während des laufenden Prozesses optimieren zu können, wobei gleichzeitig Fehlfunktionen der geregelten Antriebsapplikation, z.B. aufgrund von Kollisionen einzelner Pakete, vermieden werden sollen.

Es ist Aufgabe der Erfindung, ein Verfahren und eine Vorrichtung zur computer-implementierten Konfiguration einer geregelten Antriebsapplikation eines Logistiksystems anzugeben, welche diese Probleme auf einfache und zuverlässige Weise löst.

Diese Aufgaben werden gelöst durch ein Verfahren gemäß den Merkmalen des Patentanspruches 1, eine Vorrichtung gemäß den Merkmalen des Patentanspruches 9, ein Logistiksystem gemäß den Merkmalen des Anspruches 11 und ein Computerprogramm gemäß den Merkmalen des Anspruches 12. Vorteilhafte Ausgestaltungen ergeben sich aus den abhängigen Ansprüchen.

Die Erfindung schlägt ein Verfahren zur computer-implementierten Konfiguration einer geregelten Antriebsapplikation eines Logistiksystems vor. Das Logistiksystem umfasst ein oder mehrere parallel verlaufende Förderstrecken für Stückgut. Stückgüter sind insbesondere Pakete, welche beispielsweise einer Sortieranlage zugeführt werden sollen. Das vorliegende Verfahren eignet sich jedoch auch für alle anderen Arten von Stückgut. Die Förderstrecken münden in einer Förderrichtung jeweils in eine Vereinigungseinheit. Jede der Förderstrecken besteht aus einer Mehrzahl an Teilförderstrecken, welche hintereinander angeordnet sind, so dass ein Stückgut unterbrechungsfrei von einer Teilförderstrecke an eine andere, angrenzende Teilförderstrecke übergeben werden kann. Die Teilförderstrecken werden unter Steuerung einer Recheneinheit von einem jeweils zugeordneten Antrieb beschleunigt oder verzögert. Die Beschleunigung oder Verzögerung erfolgt dabei individuell für jede Teilförderstrecke. Die Beschleunigung oder Verzögerung kann auch einen Beschleunigungs- oder verzögerungswert von 0 umfassen. Durch das selektive Beschleunigen oder Verzögern einer jeweiligen Teilförderstrecke wird die am Ende der Förderstrecken angeordnete Vereinigungseinheit in die Lage versetzt, das Stückgut auf eine einzige Ausgangsförderstrecke mit definiertem Abstand zu vereinen. Mit anderen Worten werden die Stückgüter in definierten Abständen zueinander auf die Ausgangsförderstrecke verbracht.

Gemäß dem Verfahren der vorliegenden Erfindung werden die folgenden Schritte durchgeführt:
Es wird ein Systemmodell des Logistiksystems anhand Betriebsdaten des Logistiksystems bestimmt, wobei die Betriebsdaten für eine Vielzahl von Zeitpunkten des Betriebs des Logistiksystems vorliegen und für jeden Zeitpunkt Messwerte von Sensoren des Logistiksystems und Stellgrößenänderungen umfassen. Das Systemmodell stellt ein Simulationsmodell dar, das die Dynamik des Logistiksystems wiedergibt.

In einem nächsten Schritt wird eine Regelfunktion des Logistiksystems bestimmt, wobei die Regelfunktion zumindest Konfigurationsdaten für die Antriebe umfasst. Die Bestimmung der Regelfunktion erfolgt anhand des Systemmodells, indem unter Vorgabe eines oder mehrerer zu erreichender Leistungsmerkmale in dem Systemmodell zumindest eine Regelung ausgeführt wird, bei der die Betriebsdaten für eine Vielzahl von Zeitschritten simuliert wird. Dabei wird für jeden Zeitschritt ein Belohnungsmaß ermittelt, wobei die Regelung als Regelfunktion verwendet wird, bei der eine vorgegebene Fitnessfunktion, die die Belohnungsmaße einer Vielzahl von Zeitschritten aggregiert, ein vorbestimmtes Kriterium erfüllt, und insbesondere maximiert wird.

Das Verfahren der Erfindung stellt eine einfache Methode zur computer-implementierten Bestimmung von Konfigurationsdaten für die den Teilförderstrecken zugeordneten Antriebe dar. Konfigurationsdaten im Sinne der Erfindung sind dabei insbesondere Steuersignale für die Antriebe, um die zugeordneten Teilförderstrecken in geeigneter Weise zu beschleunigen oder zu verzögern, um die Vereinigungseinheit in die Lage zu versetzen, das über die mehreren parallelen Förderstrecken zugeführte Stückgut auf eine einzige Ausgangsförderstrecke mit definiertem Abstand zu vereinen.

Insbesondere erfolgt das Bestimmen des Systemmodells durch Methoden des überwachten Lernens. Besonders bevorzugt ist dabei die Verwendung eines neuronalen Netzes oder eines rekurrenten neuronalen Netzes. Das Bestimmen der Regelfunktion erfolgt insbesondere durch bestärkendes Lernen (reinforcement learning).

Durch den Einsatz von Verfahren des maschinellen Lernens entfällt der Aufwand für die manuelle Anpassung der Regelfunktion. Die Konfigurationsdaten können dadurch automatisiert bestimmt werden. Die Verwendung bestärkender Lernverfahren zum Bestimmen der Regelfunktion ermöglicht das Auffinden besserer und zuverlässigerer Lösungen, als dies durch das manuelle Anpassen bislang möglich war. Dadurch kann ausgangsseitig der Vereinigungseinheit ein größerer Durchsatz erreicht werden. Weiterhin ist es möglich, aufeinander folgende Stückgüter mit größerer Gleichmäßigkeit auf der Ausgangsförderstrecke zu fördern.

Die Verwendung von Methoden des überwachten Lernens zum Erstellen des Systemmodells ermöglicht in Verbindung mit einer schnellen Optimierung der Regelung eine kurzfristige Anpassung vorgegebener Optimierungsziele in Gestalt zu erreichender Leistungsmerkmale. Im Ergebnis lassen sich geringere Kosten einer Inbetriebnahme des Logistiksystems erzielen. Darüber hinaus kann die Leistungsfähigkeit des Logistiksystems gesteigert werden.

Eine zweckmäßige Ausgestaltung des Verfahrens sieht vor, als Fitnessfunktion die Summe des oder der Leistungsmerkmale über die simulierten Zeitschritte zu verarbeiten. Als Fitnessfunktion kann z.B. die Summe eines bestimmten Leistungsmerkmals über die Zeit verwendet werden, z.B. ein mittlerer Durchsatz an Stückgütern am Ausgang der Vereinigungseinheit.

Als Leistungsmerkmal kann einer oder mehrere der folgenden Parameter verarbeitet werden: ein mittlerer Durchsatz an Stückgütern am Ausgang der Vereinigungseinheit; ein, insbesondere minimaler, Abstand zwischen zwei unmittelbar hintereinander geförderten Stückgütern (der Abstand zwischen zwei unmittelbar hintereinander geförderten Stückgütern wird auch als Lückenabstand bezeichnet); die Detektion einer Kollision in der Vereinigungseinheit, insbesondere an deren Ausgang; ein Abstandsgleichförmigkeitsmaß, das eine Abweichung der Abstände von einer Äquidistanz zwischen jeweils zwei unmittelbar hintereinander geförderten Stückgütern charakterisiert; eine Laufgeschwindigkeit der Teilförderstrecken einer jeweiligen Förderstrecke oder der Förderstrecken im Gesamten. Die Regelung kann, wie vorstehend erläutert, unter Vorgabe eines oder mehrerer zu erreichender Leistungsmerkmale in dem Systemmodell ausgeführt werden.

Gemäß einer weiteren bevorzugten Ausgestaltung ist vorgesehen, dass zur Bestimmung der Regelfunktion eine oder mehrere Eingangsgrößen des Systemmodells variiert werden. Als Eingangsgrößen des Systemmodells kann einer oder mehrere der folgenden Parameter verarbeitet werden: eine jeweilige Geschwindigkeit der Teilförderstrecken (korrespondierend zu einer jeweiligen Drehzahl der Antriebe); eine Position eines jeweiligen Stückguts auf einer jeweiligen Förderstrecke oder einer Teilförderstrecke einer jeweiligen Förderstrecke; eine Größe, insbesondere Länge, eines jeweiligen Stückguts; ein Durchsatz an Stückgütern am Ausgang der Vereinigungseinheit; eine Kollision in der Vereinigungseinheit, insbesondere an deren Ausgang. Eine Kollision kann beispielsweise dadurch detektiert werden, dass nach dem Ausgang der Vereinigungseinheit nach dem Ablauf einer vorgegebenen Zeitdauer kein Stückgut mehr detektiert wird.

Die Eingangsgrößen, die zur Bestimmung der Regelfunktion des Systemmodells variiert werden, stellen bevorzugt gleichzeitig die Betriebsparameter des Systemmodells dar. Die genannten Parameter sind damit zur Bestimmung des Systemmodells als Betriebsdaten für eine Vielzahl von Zeitpunkten des Betriebs des Logistiksystems vorliegend und umfassen Messwerte von Sensoren des Logistiksystems sowie Stellgrößenänderungen, wie z.B. eine Veränderung einer jeweiligen Geschwindigkeit der Teilförderstrecken.

Neben dem oben beschriebenen Verfahren bezieht sich die Erfindung auf eine Vorrichtung zur computer-implementierten Konfiguration einer geregelten Antriebsapplikation eines Logistiksystems, wobei die Vorrichtung eine Recheneinheit zur Steuerung von jeweils einem dem Teilförderstrecken zugeordneten Antrieb zur Beschleunigung oder Verzögerung umfasst, wobei die Recheneinheit zur Durchführung des Verfahrens nach einem oder mehreren bevorzugten Ausführungsformen der Erfindung ausgebildet ist.

Ferner bezieht sich die Erfindung auf ein Logistiksystem mit einer oder mehreren parallel verlaufenden Förderstrecken für Stückgut, wie dieses hierin beschrieben ist. Dabei umfasst das Logistiksystem erfindungsgemäß eine Vorrichtung gemäß einer oder mehreren bevorzugten Ausgestaltungen der hierin beschriebenen Art.

Schließlich bezieht sich die Erfindung auf ein Computerprogramm mit Programmcode, der auf einem nicht-flüchtigen, maschinenlesbaren Träger gespeichert ist, zum Durchführen eines Verfahrens nach einer oder mehreren bevorzugten Ausführungsformen der Erfindung, wenn der Programmcode auf einem Computer ausgeführt wird.

Die Erfindung wird nachfolgend näher anhand eines Ausführungsbeispiels in der Zeichnung beschrieben. Es zeigen:
- Fig. 1: eine schematische Darstellung eines Logistiksystems mit einer Recheneinheit zur Durchführung des erfindungsgemäßen Verfahrens zur computerimplementierten Konfiguration der darin verwirklichten geregelten Antriebsapplikation; und
- Fig. 2: eine schematische Darstellung der durch die Recheneinheit durchgeführten Verfahrensschritte.

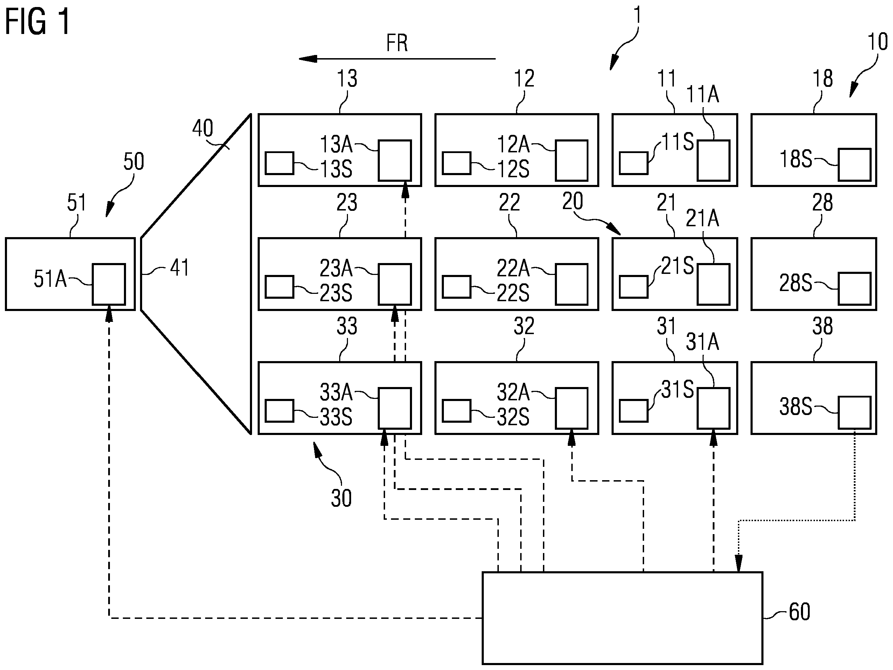

Fig. 1 zeigt eine schematische Darstellung eines Logistiksystems 1 mit einer geregelten Antriebsapplikation. Das Logistiksystem 1 umfasst beispielhaft drei parallel zueinander verlaufende Förderstrecken 10, 20, 30, auf denen jeweils in einer von rechts nach links verlaufenden Förderrichtung FR Stückgut, insbesondere Pakete, gefördert werden können. Jede der gleichlangen und auch als Finger bezeichneten Förderstrecken 10, 20, 30 umfasst eine Mehrzahl an Teilförderstrecken 11-13, 21-23, 31-33. Die Anzahl der Teilförderstrecken pro Förderstrecke 10, 20, 30 ist im vorliegenden Ausführungsbeispiel gleich, wobei dies jedoch nicht zwingend ist. Die Teilförderstrecken 11-13, 21-23, 31-33 einer jeweiligen Förderstrecke 10, 20, 30 können gleich lang oder unterschiedliche Längen aufweisen.

Jeder der Teilförderstrecken 11-13, 21-23, 31-33 ist jeweils ein Antrieb 11A-13A, 21A-23A, 31A-33A zugeordnet. Durch entsprechende Ansteuerung der Antriebe 11A-13A, 21A-23A, 31A-33A mittels einer Recheneinheit können die Teilförderstrecken 11-13, 21-23, 31-33 individuell beschleunigt oder verzögert werden.

Am Ende der Förderstrecken 10, 20, 30, d.h. in Förderrichtung FR, ist eine Vereinigungseinheit 40 angeordnet, auf welche die in Förderrichtung FR letzten Teilförderstrecken 13, 23, 33 die von ihnen transportierten Stückgüter übergeben. An einem Ausgang 41 der Vereinigungseinheit 40 ist eine einzige Ausgangsförderstrecke 50 angeordnet. Diese kann aus einer oder mehreren Teilförderstrecken 51 bestehen. Der oder die Teilförderstrecken 51 werden wiederum unter Steuerung der Recheneinheit 60 von einem Antrieb 51A angetrieben.

Die Beschleunigung und Verzögerung jeweiliger Teilförderstrecken vermittels geeigneter Steuersignale für die Antriebe 11A-13A, 21A-23A, 31A-33A ermöglicht es, auf den parallelen Förderstrecken 10, 20, 30 transportiertes Stückgut zeitlich versetzt auf die Vereinigungseinheit 40 zu transportieren. Die Vereinigungseinheit 40 ist dadurch in die Lage versetzt, das Stückgut auf die Ausgangsförderstrecke 50 derart zu fördern, dass jeweils zwei zeitlich aufeinanderfolgende Stückgüter einen vorgegebenen definierten Abstand zueinander aufweisen.

Um die Recheneinheit 60 in die Lage zu versetzen, geeignete Ansteuersignale zum Beschleunigen und Verzögern der Antriebe 11A-13A, 21A-23A, 31A-33A abzugeben, ist eine jeweilige Teilförderstrecke 11-13, 21-23, 31-33 mit einer Anzahl an jeweiligen Sensoren 11S-13S, 21S-23S, 31S-33S versehen. Die Sensoren 11S-13S, 21S-23S, 31S-33S umfassen insbesondere Lichtschranken zur Ermittlung einer jeweiligen Transportgeschwindigkeit eines Stückguts, einer Länge des Stückguts, einer Position und/oder einer Abweichung von einer erwarteten Position. Die Sensoren umfassen optional z.B. Drehzahlsensoren zur Detektion der Drehzahl der Antriebe 11A-13A, 21A-23A, 31A-33A, Stromsensoren zur Detektion der Motorströme der Antriebe 11A-13A, 21A-23A, 31A-33A, usw.

Die Zufuhr der Stückgüter auf die Förderstrecken 10, 20, 30 erfolgt über jeweilige Übergabeeinheiten 18, 28, 38, welche beispielsweise ebenfalls als Teilförderstrecken ausgebildet sind. Auch die Übergabeeinheiten 18, 28, 38 verfügen über einen entsprechenden (hier jedoch nicht explizit dargestellten) Antrieb und eine Anzahl an entsprechenden Sensoren 18S, 28S, 38S. Die Übergabeeinheiten können von den eigentlichen Förderstrecken 10, 20, 30 unabhängige Segmente sein. Die Übergabeeinheiten 18, 28, 38 können jedoch auch eine jeweilige Teilförderstrecke der zugeordneten Förderstrecke 10, 20, 30 darstellen.

Der Einfachheit halber sind in Fig. 1 nur die Übergabeeinheiten 18, 28, 38 mit entsprechenden Sensoren 18S, 28S, 38S versehen. Entsprechende Messsignale werden der Recheneinheit 60 zur weiteren Verarbeitung zugeführt. Ein Messsignal ist durch eine punktierte Linie dargestellt. Der Einfachheit halber sind nicht alle Messsignale bzw. zur Übertragung erforderliche Signalleitungen dargestellt.

Die den Teilförderstrecken 11-13, 21-23, 31-33 zugeordneten Antriebe 11A-13A, 21A-23A, 31A-33A, 51A werden über gestrichelte Linien mit entsprechenden Ansteuersignalen gesteuert. Der Einfachheit halber sind nicht alle Ansteuersignale bzw. zur Übertragung erforderliche Ansteuerleitungen dargestellt.

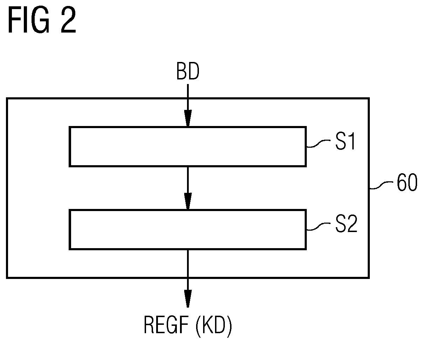

Das nachfolgend beschriebene Verfahren zur computer-implementierten Konfiguration der geregelten Antriebsapplikation des Logistiksystems 1 wird durch die Recheneinheit 60 durchgeführt. Die Schritte können jedoch auch auf einer von der letztendlichen Steuerung des Logistiksystems 1 unabhängigen Recheneinheit durchgeführt werden. Das Vorgehen ist in schematischer Weise in Fig. 2 dargestellt.

In einem ersten Schritt S1 erfolgt das Bestimmen eines Systemmodells des Logistiksystems 1 anhand Betriebsdaten BD des Logistiksystems. Die Betriebsdaten BD liegen für eine Vielzahl von Zeitpunkten des Betriebs des Logistiksystems 1 vor und umfassen für jeden Zeitpunkt Messwerte der Sensoren 11S-13S, 21S-23S, 31S-33S, 18S-38S, wie z.B. Lichtschrankensignale, Motorströme, Positionen der Stückgüter auf den jeweiligen Teilförderstrecken 11-13, 21-23, 31-33, 18-38, Drehzahlen der Antriebe 11A-13A, 21A-23A, 31A-33A, sowie Geschwindigkeiten der Teilförderstrecken 11-13, 21-23, 31-33. Grundsätzlich können dabei nicht nur Betriebsdaten BD des aktuell betrachteten Logistiksystems 1, sondern auch Betriebsdaten BD von anderen, dann vorzugsweise ähnlichen Logistiksystemen, verarbeitet werden.

Darüber hinaus werden in Schritt S1 für jeden Zeitpunkt Stellgrößenänderungen, welche z.B. Geschwindigkeitsänderungen bzw. Drehzahländerungen der Antriebe 11A-13A, 21A-23A, 31A-33A, 18A-38A umfassen, ermittelt und verarbeitet.

Das Bestimmen des Systemmodells erfolgt durch Methoden des überwachten Lernens, insbesondere durch ein neuronales Netz oder ein rekurrentes neuronales Netz. Da das diesbezügliche Vorgehen bekannt ist, wird auf eine eingehende Beschreibung an dieser Stelle verzichtet.

In einem zweiten Schritt S2 erfolgt das Bestimmen einer Regelfunktion des Logistiksystems 1. Die Regelfunktion REGF umfasst zumindest Konfigurationsdaten KD für die Antriebe 11A-13A, 21A-23A, 31A-33A, d.h. Motorströme und/oder Drehzahlen und dergleichen, so dass die zugeordneten Teilförderstrecken 11-13, 21-23, 31-33 in geeigneter Weise beschleunigt oder verzögert werden können.

Das Bestimmen der Regelfunktion REGF erfolgt anhand des in Schritt S1 bestimmten Systemmodells, indem unter Vorgabe eines oder mehrerer zu erreichender Leistungsmerkmale in dem Systemmodell zumindest eine Regelung ausgeführt wird. Als Leistungsmerkmal kann beispielsweise einer oder mehrere der folgenden Parameter verarbeitet werden: ein mittlerer Durchsatz an Stückgütern am Ausgang 41 der Vereinigungseinheit 40; ein, insbesondere minimaler, Abstand zwischen zwei unmittelbar hintereinander geförderten Stückgütern, d.h. ein Lückenabstand; die Detektion einer Kollision in der Vereinigungseinheit 40, insbesondere an deren Ausgang 41; ein Abstandsgleichförmigkeitsmaß, das eine Abweichung der Abstände von einer Äquidistanz zwischen jeweils zwei unmittelbar hintereinander geförderten Stückgütern charakterisiert, d.h. eine Gleichförmigkeit des Lückenabstands; sowie eine Laufgeschwindigkeit der drei Förderstrecken einer jeweiligen Förderstrecke oder der Förderstrecken im Gesamten, um beispielsweise eine Verschleißoptimierung zu erzielen.

Bei der Regelung werden die Betriebsdaten BD für eine Vielzahl von Zeitschritten simuliert. Dabei wird für jeden Zeitschritt ein Belohnungsmaß ermittelt. Schließlich wird als Regelfunktion REGF die Regelung verwendet, bei der eine vorgegebene Fitnessfunktion, die die Belohnungsmaße einer Vielzahl von Zeitschritten aggregiert, ein vorgegebenes Kriterium erfüllt. Insbesondere kann auf eine Maximierung der Belohnungsmaße gearbeitet werden.

Das Bestimmen der Regelfunktion REGF erfolgt durch solche Verfahren, die geeignet sind, eine Regelung zu erstellen, die die Fitnessfunktion erhöhen. Als Fitnessfunktion kann beispielsweise die Summe des oder der Leistungsmerkmale über die Zeitschritte verwendet werden, z.B. der mittlere Durchsatz. Ein solches Vorgehen kann durch Verfahren des bestärkenden Lernens erreicht werden, wobei als Fitnessfunktion dann z.B. die diskontierte Summe der erwarteten Belohnungen verarbeitet wird. Dies kann z.B. der Durchsatz oder die Nähe zu einem gewünschten Lückenabstand sein. Weitere Ziele können eine geringe Breite der Verteilung der Paketabstände (Lückenabstände) oder eine hohe Laufgeschwindigkeit der Teilförderstrecken bei Einhaltung bestimmter Abstands-Quantile der Stückgüter sein. Da die einzelnen Ziele teilweise im Widerspruch zueinander stehen, sind diese durch die erlernten Aktionen der Regelfunktion REGF auszugleichen.

Durch den zweiten Schritt S2 kann durch bestärkendes Lernen eine optimale Regelfunktion REGF für die vorgegebene Fitnessfunktion anhand von Interaktionen mit dem Systemmodell gelernt werden. Es erfolgt somit ein Optimieren der Regelfunktion REGF durch Training gegen das Systemmodell des Logistiksystems 1. Daraus lässt sich dann die interpretierbare Regelfunktion REGF ableiten, welche die Erzeugung der Konfigurationsdaten für die Antriebe 11A-13A, 21A-23A, 31A-33A ermöglicht.

Durch modellbasierte Ansätze des bestärkenden Lernens kann die Regelfunktion REGF in der Simulation des Systemmodells ausgeführt werden und eine Vielzahl von Zeitschritten kann simuliert werden. Durch Variation typischer Modelleingangsgrößen, wie z.B. Größen der Stückgüter, deren Masse, Reibwerte und dergleichen, können praxisnahe Verteilungen über bisher vorhandene Betriebsdaten BD erzeugt werden. Dies ermöglicht eine hohe Robustheit der abgeleiteten Regelfunktion REGF und Konfigurationsdaten KD. Da für jeden Zeitschritt die Fitnessfunktion mitsimuliert wird, kann die Entwicklung der Belohnungsmaße näherungsweise berechnet werden.

Die Verwendung einer interpretierbaren Repräsentation der Regelung erlaubt das Lernen von interpretierbaren Regelungen. Diese ermöglichen das Formalisieren des Erfahrungswissens und unterstützen Vor-Ort-Anpassungen bei der Inbetriebnahme des Logistiksystems 1.

Bei der Verwendung der Kombination eines gelernten Systemmodells mit schnellen Optimierungsverfahren, wie z.B. einer Partikelschwarmoptimierung (particle swarm optimization), können Regelungen für veränderte Optimierungsziele kurzfristig erstellt werden. Bei einer Mehrschrittoptimierung, ähnlich der bekannten Model Predictive Control, kann eine Anpassung an veränderte Optimierungsziele verzögerungsfrei erreicht werden.

Zur Bestimmung optimaler Konfigurationsdaten KD können Betriebsdaten von weiteren Logistiksystemen genutzt werden, um mit Q-Funktions-basierten bestärkenden Lernverfahren eine Regelfunktion REGF zu lernen. Alternativ kann das Systemmodell mit Gültigkeit für alle Logistiksysteme trainiert werden, wodurch dann eine Optimierung für das gerade betrachtete Logistiksystem ermöglicht wird.

## Patentansprüche

1. Verfahren zur computer-implementierten Konfiguration einer geregelten Antriebsapplikation eines Logistiksystems (1), wobei das Logistiksystem (1) eine oder mehrere parallel verlaufende Förderstrecken (10, 20, 30) für Stückgut umfasst, die in Förderrichtung (FR) jeweils in eine Vereinigungseinheit (40) münden, wobei jede der Förderstrecken (10, 20, 30) aus einer Mehrzahl an Teilförderstrecken (11-13, 21-23, 31-33) besteht, die unter Steuerung einer Recheneinheit (60) von einem jeweils zugeordneten Antrieb (11A-13A, 21A-23A, 31A-33A) beschleunigt oder verzögert werden, um die Vereinigungseinheit (40) in die Lage zu versetzen, das Stückgut auf eine einzige Ausgangsförderstrecke (50) mit definiertem Abstand zu vereinen, mit den Schritten:
- Bestimmen eines Systemmodells des Logistiksystems (1) anhand Betriebsdaten des Logistiksystems (1), wobei die Betriebsdaten (BD) für eine Vielzahl von Zeitpunkten des Betriebs des Logistiksystems vorliegen und für jeden Zeitpunkt Messwerte von Sensoren (18S-28S) des Logistiksystems und Stellgrößenänderungen umfassen;
- Bestimmen einer Regelfunktion des Logistiksystems (1), die zumindest Konfigurationsdaten (KD) für die Antriebe (11A-13A, 21A-23A, 31A-33A) umfasst, anhand des Systemmodells, indem unter Vorgabe eines oder mehrerer zu erreichender Leistungsmerkmale in dem Systemmodell zumindest eine Regelung ausgeführt wird, bei der die Betriebsdaten (BD) für eine Vielzahl von Zeitschritten simuliert werden, wobei für jeden Zeitschritt ein Belohnungsmaß ermittelt wird, wobei die Regelung als Regelfunktion verwendet wird, bei der eine vorgegebene Fitnessfunktion, die die Belohnungsmaße einer Vielzahl von Zeitschritten aggregiert, ein vorbestimmtes Kriterium erfüllt, insbesondere maximiert wird.

2. Verfahren nach Anspruch 1, bei dem das Bestimmen des Systemmodells durch Methoden des überwachten Lernens, insbesondere durch ein neuronales Netz oder ein rekurrentes neuronales Netz, erfolgt.

3. Verfahren nach Anspruch 1 oder 2, bei dem das Bestimmen der Regelfunktion durch bestärkendes Lernen erfolgt.

4. Verfahren nach einem der vorhergehenden Ansprüche, bei dem als Fitnessfunktion die Summe des oder der Leistungsmerkmale über die simulierten Zeitschritte verarbeitet wird.

5. Verfahren nach einem der vorhergehenden Ansprüche, bei dem als Leistungsmerkmal einer oder mehrere der folgenden Parameter verarbeitet werden:
- ein mittlerer Durchsatz an Stückgütern am Ausgang (41) der Vereinigungseinheit (40);
- ein, insbesondere minimaler, Abstand zwischen zwei unmittelbar hintereinander geförderten Stückgütern;
- die Detektion einer Kollision in der Vereinigungseinheit (40), insbesondere an deren Ausgang (41);
- ein Abstandsgleichförmigkeitsmaß, das eine Abweichung der Abstände von einer Äquidistanz zwischen jeweils zwei unmittelbar hintereinander geförderten Stückgütern charakterisiert;
- eine Laufgeschwindigkeit der Teilförderstrecken (11-13, 21-23, 31-33) einer jeweiligen Förderstrecke (10, 20, 30) oder der Förderstrecken (10, 20, 30) im Gesamten.

6. Verfahren nach einem der vorhergehenden Ansprüche, bei dem zur Bestimmung der Regelfunktion eine oder mehrere Eingangsgrößen des Systemmodells variiert werden.

7. Verfahren nach Anspruch 6, bei dem als Eingangsgrößen des Systemmodells eine oder mehrere der folgenden Parameter verarbeitet werden:
- eine jeweilige Geschwindigkeit der Teilförderstrecken (11-13, 21-23, 31-33);
- eine Position eines jeweiligen Stückguts;
- eine Größe, insbesondere Länge, eines jeweiligen Stückguts;
- ein Durchsatz an Stückgütern am Ausgang (41) der Vereinigungseinheit (40);
- eine Kollision in der Vereinigungseinheit (40), insbesondere an deren Ausgang (41).

8. Verfahren nach Anspruch 7, bei dem die Eingangsgrößen Betriebsparameter des Systemmodells sind.

9. Vorrichtung zur computer-implementierten Konfiguration einer geregelten Antriebsapplikation eines Logistiksystems (1), wobei das Logistiksystem (1) eine oder mehrere parallel verlaufende Förderstrecken (10, 20, 30) für Stückgut umfasst, die in Förderrichtung (FR) jeweils in eine Vereinigungseinheit (40) münden, wobei jede der Förderstrecken (10, 20, 30) aus einer Mehrzahl an Teilförderstrecken (11-13, 21-23, 31-33) besteht, die unter Steuerung einer Recheneinheit (60) der Vorrichtung von einem jeweils zugeordneten Antrieb (11A-13A, 21A-23A, 31A-33A) beschleunigt oder verzögert werden, um die Vereinigungseinheit (40) in die Lage zu versetzen, das Stückgut auf eine einzige Ausgangsförderstrecke (50) mit definiertem Abstand zu vereinen, wobei die Recheneinheit (60) zur Durchführung der folgenden Schritte ausgebildet ist:
- Bestimmen eines Systemmodells des Logistiksystems (1) anhand Betriebsdaten des Logistiksystems (1), wobei die Betriebsdaten (BD) für eine Vielzahl von Zeitpunkten des Betriebs des Logistiksystems vorliegen und für jeden Zeitpunkt Messwerte von Sensoren (18S-28S) des Logistiksystems und Stellgrößenänderungen umfassen;
- Bestimmen einer Regelfunktion des Logistiksystems (1), die zumindest Konfigurationsdaten (KD) für die Antriebe (11A-13A, 21A-23A, 31A-33A) umfasst, anhand des Systemmodells, indem unter Vorgabe eines oder mehrerer zu erreichender Leistungsmerkmale in dem Systemmodell zumindest eine Regelung ausgeführt wird, bei der die Betriebsdaten (BD) für eine Vielzahl von Zeitschritten simuliert werden, wobei für jeden Zeitschritt ein Belohnungsmaß ermittelt wird, wobei die Regelung als Regelfunktion verwendet wird, bei der eine vorgegebene Fitnessfunktion, die die Belohnungsmaße einer Vielzahl von Zeitschritten aggregiert, ein vorbestimmtes Kriterium erfüllt, insbesondere maximiert wird.

10. Vorrichtung nach Anspruch 9, wobei diese dazu ausgebildet ist, das Verfahren gemäß einem der Ansprüche 2 bis 8 durchzuführen.

11. Logistiksystems (1) mit einer oder mehreren parallel verlaufenden Förderstrecken (10, 20, 30) für Stückgut, die in Förderrichtung (FR) jeweils in eine Vereinigungseinheit (40) münden, wobei jede der Förderstrecken (10, 20, 30) aus einer Mehrzahl an Teilförderstrecken (11-13, 21-23, 31-33) besteht, die unter Steuerung einer Recheneinheit (60) von einem jeweils zugeordneten Antrieb (11A-13A, 21A-23A, 31A-33A) beschleunigt oder verzögert werden, um die Vereinigungseinheit (40) in die Lage zu versetzen, das Stückgut auf eine einzige Ausgangsförderstrecke (50) mit definiertem Abstand zu vereinen, wobei das Logistiksystem (1) eine Vorrichtung gemäß Anspruch 9 oder 10 umfasst.

12. Computerprogramm mit Programmcode, der auf einem nicht-flüchtigen, maschinenlesbaren Träger gespeichert ist, zum Durchführen eines Verfahrens nach einem der Ansprüche 1 bis 8, wenn der Programmcode auf einem Computer ausgeführt wird.
